# EUROPEAN PATENT APPLICATION

(11) **EP 3 686 425 A1**
(43) Date of publication of application: **29.07.2020**
(21) Application number: 18866741.4
(22) Date of filing: 14.09.2018
(51) Int. Cl.: F03D 9/43, F03D 9/34, F03D 3/00

(54) **WIND GENERATOR DEVICE**

(30) Priority: 21.09.2017 ES 201731094 U
(71) Applicant: Palmerin Rodriguez, Mª Cristina, 48007 Bilbao (ES)
(72) Inventor: PALMERIN RODRIGUEZ, Jose Antonio, 48007 Bilbao (ES)
(86) International application number: PCT/ES2018/070601
(87) International publication number: WO 2019/073095

(57) **Abstract**

WIND GENERATOR DEVICE which, comprising a plurality of blades (2) associated with a shaft (3) with a pinion (4) linked to a gearbox (5) that drives a transformer (6) with an output cable (7) of current connectable to the network or to accumulation batteries, is characterized in that it incorporates said elements inside a tubular casing (8) with anchoring means (9) to fix and use as support an existing structure or infrastructure (10), for example the guardrail of a highway, taking advantage of the air currents produced in it; and because the blades (2) are arranged grouped into sets of propellers (21), each of said sets of propellers (21) coinciding with as many openings (82) made on the side of the casing (8), to favor the entry of air that moves said propellers.

## Description

### OBJECT OF THE INVENTION

The invention, refers to a wind generator device that provides for its function advantages and features, which are described in detail below, that are novel in the current state of the art.

More specifically, the object of the invention focuses on a wind power generator that is configured as a tubular device that, internally comprises one or more sets of blades associated with an axial axis with a pinion and a gearbox that drives a transformer with a current output cable that can be connected to the power grid or to accumulation batteries to get an electrical power supply. It is specially designed to be installed, at a very low economic cost, in existing infrastructures, for example structures such as highways or metro guardrails or the shoulders of railways or others, and takes advantage of the significant and / or constant gusts of wind produced in them by the speed of vehicles and trains passing by.

### FIELD OF APPLICATION OF THE INVENTION

The field of application of the present invention is framed within the wind energy sector, focusing particularly on the field of industries dedicated to the manufacture of wind generating devices.

### BACKGROUND OF THE INVENTION

As it is known, wind energy is one of the "clean" energies whose use can help reduce the planet's environmental problems. And, although different types and models of apparatus and devices that generate electrical power from such use are known, many of them constitute complex structures to manufacture and expensive to install.

On the other hand, an important factor to take into account in this type of apparatus is that, to be profitable, they must be installed in places where the incidence of the wind is sufficient to make them work optimally and relatively constantly. For this reason, the wind fields of wind turbines placed at the end of high masts distributed in high rural areas, far from urban centers are so popular.

These generators, however, in addition to the significant economic cost of manufacturing and installation and the distance to the consumption locations, often provoke the rejection of important sectors of the population on the regions in which they are installed due to the impact they cause on the landscape and / or adverse effects on the fauna and flora of the area.

The objective of the present invention is, therefore, to develop an improved type of wind generator that, in addition to a lower economic cost, avoids causing any kind of impact on the landscape, when installed taking advantage of a multitude of existing structures and infrastructures, many of the which, by their own nature or that of the elements that use them, constitute locations where a large amount of wind energy is generated.

Specifically, a very clear example of this are the vehicles that circulate on the roads and highways and that, when moving at high speeds constantly generate wind drafts on the shoulders, which, in many of their sections, are provided of guardrails that collect these currents, and that could constitute suitable support structures to install wind generators.

In the same way, on the shoulders of the metropolitan railroads, constant air currents are produced with the passing of the trains that could be used. Also in tunnels or bridges where there are already turbines to force the recirculation of air, air currents are produced that can be used with generators that can be installed next to them without involving a significant impact or cost of installation, since they can take advantage of the structures already installed on the tunnel or bridge.

Another example is the roofs of skyscrapers or other buildings of considerable height, where, for this reason, constant air currents are produced, and not taken advantage of.

On the other hand, and as a reference to the current state of the art, it should be noted that, although as has been said, different types and models of wind generators designed for different applications and / or locations are known, at least by the applicant, the existence of one that presents structural and constitutive characteristics equal or similar to those presented by the one claimed here is unknown.

### EXPLANATION OF THE INVENTION

The wind generator device proposed by the invention is thus configured as a novelty within its field of application, the characterizing details distinguishing it conveniently being included in the final claims that accompany the present description.

Specifically, what the invention proposes, as previously pointed out, is a wind power generator that, comprising a plurality of blades associated with an axial axis with a pinion and a gearbox that drives a transformer with an output cable of current connectable to the power grid or to accumulation batteries to channel the electrical energy that it produces when transforming the movement of the blades moved by the wind. It is distinguished by being configured as a tubular device to take advantage of air currents produced in structures or already existing infrastructures and use them at the same time as support for their installation, while being equipped with a simple design that allows a low cost of manufacture and installation.

More specifically, the device is configured, essentially, from a tubular casing, whose thickness or diameter ranges from 45 cm to 3 meters, where said casing, on the outside, is preferably made of plastic and on the inside, where the mechanical components are housed, is made of metal.

For their part, the blades are grouped into sets of several propellers, preferably three, each set coinciding with a lateral opening made in the housing to allow the entry of air currents that will make them rotate, said blades being made of plastic or some light metal.

At the top end of the shaft opposite to the one that incorporates the pinion, an additional propeller is optionally incorporated to help the air flow into the tube and move the blades of the other propellers.

The orientation of the blades is indifferent, since the tube has several inlets.

Furthermore, in the preferred embodiment, the tube that constitutes the device casing would be formed by two halves that divide it longitudinally to facilitate its transportation and storage, joint afterwards together for assembly, being able to be assembled with screws to the structure.

The rotation of the blades occurs as a result of the passage of air through any of the openings that the tubular casing presents.

Inside the tubular structure there is a shaft installed, which is metallic, located to coincide with the axial axis of the housing, from which the blades radially split and to which they are jointly connected, for example, by means of a pin.

The shaft has, at one of its ends, a metal pinion that meshes with the gearbox, which, in turn, meshes with the transformer. From the transformer there is a cable that is coupled to the main network cable, which may well be made of copper or aluminum, and that can also be connected to one or more accumulation batteries.

The objective of the invention is to describe a device to be able to take advantage of existing structures or infrastructures, for example to place it on the outside of the shoulders of the roads, taking advantage of the infrastructure already made, on the sides of the railway tracks or meters, or in the roofs of buildings or industrial halls, in tunnels and bridges, where there are already turbines to circulate air and place them at the base or perimeter without hindering existing services.

Likewise, its installation would be viable in any other location, for example in solar fields, on steep slopes and on the coasts or groynes of ports to take advantage of the currents of storms and coastal phenomena.

On the other hand, they are also capable of being inserted into the streetlights of cities and communication routes, or throughout the perimeter of airports without disturbing air traffic, and could even be used for domestic use.

The described wind generator device represents, therefore, an innovation with structural and constitutive characteristics unknown until now, reasons that together with its practical utility, provide it with sufficient grounds to obtain the exclusive privilege that is requested.

### DESCRIPTION OF THE DRAWINGS

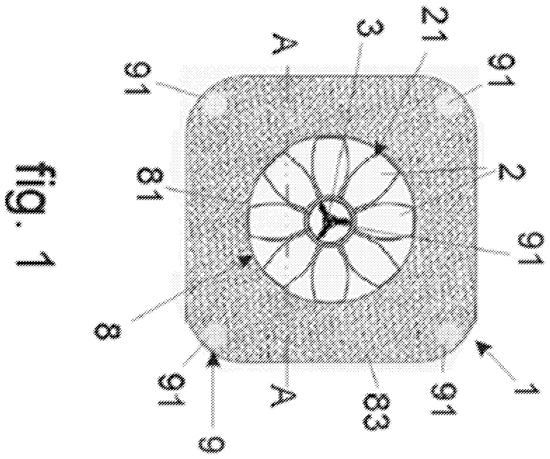

To complement the description that is being made and in order to help a better understanding of the characteristics of the invention, the present specification is accompanied by a set of drawings, that present the following:
Figure number 1.- Shows a schematic top plan view of a first example of the wind generator device, object of the invention, showing its external configuration from said upper part.
Figure number 2.- Shows a schematic sectional view of the device of the invention, according to the section A-A indicated in figure 1, showing the main parts and elements it comprises, as well as its configuration and arrangement.

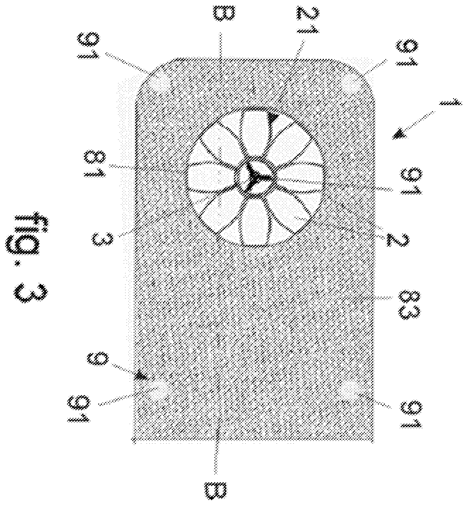

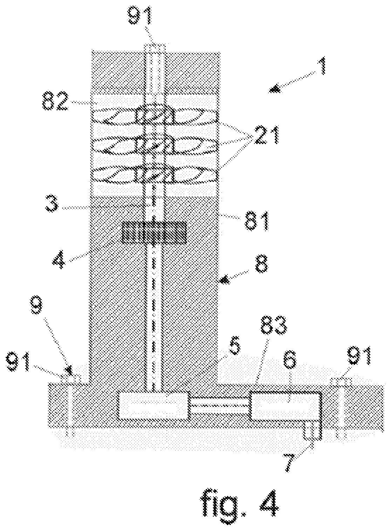

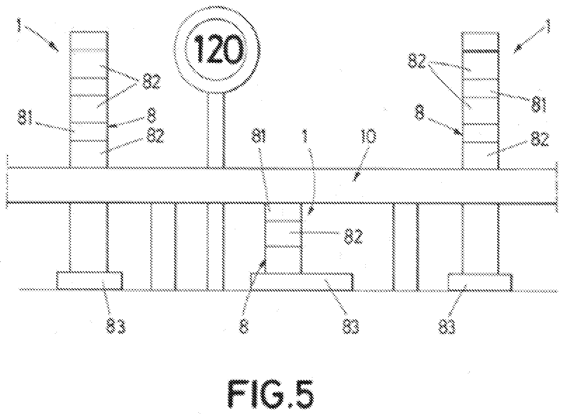

Figures 3 and 4.- Show respective views, on the top plan of Figure 3 and section of Figure 4 according to the section BB indicated in Figure 3, of a second embodiment of the wind generator device of the invention, in this case Smaller, with fewer sets of blades and base in "L".

And figure number 5.- Shows an implementation example of the two examples of the wind generator device shown in the preceding figures on the guardrail of a road.

### PREFERRED EMBODIMENT OF THE INVENTION

In view of the aforementioned figures and in accordance with the numbering adopted, one can observe two non-limiting examples of the wind generator device of the invention, which includes the parts and elements indicated and described in detail below.

Thus, as seen in said figures, the device (1) in question is a wind generator of the type that, in a known manner, comprises a plurality of blades (2) associated with a shaft (3) with a pinion (4) linked to a multiplier box (5) that drives a transformer (6) with an output cable (7) that can be connected to the power grid network or to accumulation batteries, distinguishing itself by incorporating all these elements inside a tubular casing (8) which has anchoring means (9) to fix and use in any existing structure or infrastructure (10), for example the guardrail of a road, as shown in figure 3, taking advantage of the air currents produced in it.

Preferably, the tubular casing (8) is of circular section, at least in a section (81) where it incorporates the blades (2) which, in any case, are arranged grouped into one, two or more sets, formed by two or more propellers (21), each of said sets of propellers (21) coinciding with as many openings (82) made in the lateral surface of said circular section (81) of the casing (8), to favor the air intake that moves said propellers.

Preferably, the diameter of the circular section (81) of the casing (8) ranges between 45 cm and 3 meters, always coinciding with the dimensions of the blades (2) so that they adjust to their interior space with a minimum margin of tolerance to prevent rubbing, its outer part being preferably plastic and the inner part metal.

Optionally, the end of the casing (8) opposite the position of the pinion (4) of the shaft (3), which is preferably the upper end since the preferred arrangement of said casing (8) is vertical, as shown in the examples of the figures, although this is not a limitation, incorporates an additional propeller (not shown in the figures) to help air flow into the tube and move the blades of the other propellers (21).

Furthermore, in the preferred embodiment, the tubular casing (8), at least in its circular section (81), is made up of two parts that divide it longitudinally into two halves to facilitate its transportation and storage, presenting a base (83) of support and assembly of said circular section (81), which is provided with perforations for the passage of screws (91) that act as anchoring means (9) to fix it.

Looking at the figures, it can be seen how, in a first embodiment, the casing (8) is arranged vertically and, in its circular section (81), has three sets of blades (2) formed by three propellers (21) each, in coincidence with respective openings (82), the shaft (3) being attached to its upper end by a first screw (91) and both the pinion (4) and the box multiplier (5) and transformer (6) aligned to said axis (3), the base (83) being square, and fixed to the ground or existing structure by means of two other screws (91).

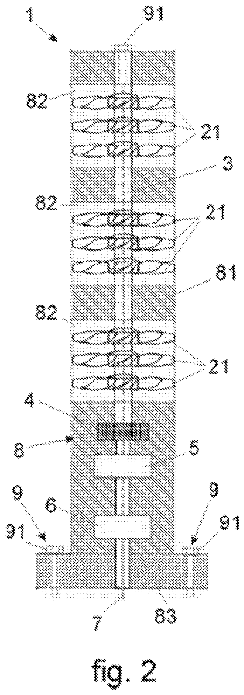

In figure 2, another example of a lower height is observed, where the casing (8), also vertically arranged, only comprises a set of three propellers (21) coinciding with a single opening (82), while the base (83) is rectangular in configuration to accommodate the multiplier box (5) and the transformer (6) that are arranged perpendicular to the axis (3).

Once the nature of the present invention has been described, as well as the way to put it into practice, it is not considered necessary to make its explanation more extensive so that any expert in the matter understands its scope and the advantages derived from it, stating that: within its essentiality, it may be put into practice in other forms of implementation that differ in detail from that indicated by way of example, and which will also achieve the protection that is provided as long as its fundamental principle is not altered, changed or modified .

## Claims

1. WIND GENERATOR DEVICE which, comprising a plurality of blades (2) associated with a shaft (3) with a pinion (4) linked to a gearbox (5) that drives a transformer (6) with an output cable (7) current connectable to the network or to accumulation batteries, that is **characterized in that** it incorporates said elements inside a tubular casing (8) with anchoring means (9) to fix and use as support an existing structure or infrastructure (10), for example the guardrail of a highway, taking advantage of the air currents produced in it; and because the blades (2) are arranged grouped into sets of propellers (21), each of said sets of propellers (21) coinciding with as many openings (82) made on the side of the casing (8), to favor the entry of air that moves said propellers.

2. WIND GENERATOR DEVICE, according to claim 1, **characterized in that** the tubular casing (8) is of circular section, at least in a section (81) where it incorporates the sets of propellers (21) with dimensions of diameter in coincidence with the dimensions of the blades (2) so that they fit inside with a minimum tolerance margin to prevent friction.

3. WIND GENERATOR DEVICE, according to claim 1 or 2, **characterized in that** the housing (8) is made of, on the outside, plastic and on the inside metal.

4. WIND GENERATOR DEVICE, according to any of claims 1 to 3, **characterized in that** the end of the casing (8) opposite to the position of the pinion (4) on the shaft (3), incorporates an additional propeller.

5. WIND GENERATOR DEVICE, according to any of claims 1 to 4, **characterized in that** the tubular casing (8) is made up of two parts that divide it longitudinally into two halves.

6. WIND GENERATOR DEVICE, according to any of claims 1 to 5, **characterized in that** the tubular casing (8) has a support base (83) provided with perforations for the passage of screws (91) that act as anchoring means (9) for fixing.
